# DEMANDE DE BREVET EUROPEEN

(11) **EP 1 310 325 A1**
(43) Date de publication de la demande: **14.05.2003**
(21) Numéro de dépôt: 01870241.5
(22) Date de dépôt: 09.11.2001
(51) Int. Cl.: B23Q 13/00, B23Q 11/10, B08B 1/00, B08B 9/00

(54) **Outillage de controle de canaux de lubrification d'un outil de coupe**

(71) Demandeur: Techspace Aero S.A., 4041 Herstal (BE)
(72) Inventeur: Honore, Didier, 4680 Hermee (BE)
(74) Mandataire: Van Malderen, Joelle

(57) **Abrégé**

La présente invention se rapporte à un outillage de contrôle et/ou de nettoyage d'un outil de coupe de précision, de préférence à arrosage central, comportant une pluralité d'orifices ou canaux de lubrification, caractérisé en ce qu'il comprend :
- un manche (1) comportant une pluralité de fils ou tiges (2) souples, dont le nombre est égal au nombre desdits orifices de lubrification à contrôler,
- une bague (4) déplaçable et amovible présentant une pluralité de canaux (5), la traversant de part en part et prévus pour le passage des tiges (2), ladite bague (4) pouvant coulisser entre la base (3) des tiges (2) associée au manche (1) et leur extrémité libre (2') desdites tiges (2).

## Description

### Objet de l'invention

La présente invention se rapporte à un outillage de contrôle des canaux de lubrification d'un outil de coupe, tel alésoir à arrosage central. En particulier cet outillage est destiné à vérifier si ces canaux de lubrification sont obstrués ou non et le cas échéant à les nettoyer.

L'invention concerne également le procédé mettant en oeuvre l'outillage.

### Etat de la technique

Dans certaines applications, comme par exemple la réalisation de disques de turbines dans l'industrie aéronautique, il est requis de procéder à des alésages de très grande précision. Ces alésages très délicats à réaliser sont soumis à des conditions strictes pour certains paramètres tels que le débit et la pression du lubrifiant de coupe, l'état de surface, etc.

Il est connu d'utiliser lors de l'usinage comme liquide de refroidissement le lubrifiant de coupe pour maîtriser l'élévation de température tout en contribuant à l'élimination des copeaux hors de la zone de coupe. Simultanément, on assure ainsi une lubrification pendant le processus de coupe de manière à limiter le phénomène d'abrasion affectant le matériau de coupe de l'outil sous l'effet du défilement des copeaux.

L'utilisation d'un liquide de refroidissement est particulièrement indiquée dans le cas d'usinage de cavités profondes et étroites. On connaît depuis quelques années des outils également appelés alésoirs incorporant une ou plusieurs canalisations d'arrivée du liquide de coupe débouchant sur des orifices aménagés de telle sorte que le jet soit toujours orienté de manière adéquate et avec force à l'endroit précis de l'interface de coupe. Une pression et un débit élevés sont indispensables pour permettre, d'une part, de restreindre l'échauffement généré par la coupe et, d'autre part, d'empêcher la vaporisation du lubrifiant utilisé, ce qui s'avérerait dommageable pour l'efficacité du refroidissement et pourrait produire des substances toxiques.

Les outils de coupe et en particulier les alésoirs à arrosage central de l'état de la technique présentent au moins un orifice relié à un canal de lubrification, situé de préférence en face de chaque lèvre de coupe. Un problème rencontré fréquemment par l'homme de métier avec les outils d'alésage dotés d'étroites canalisations d'arrosage est leur bouchage par des copeaux ou des impuretés présentes dans les fluides de coupe. Le bouchage des canaux suite à l'utilisation prolongée de l'outil peut ainsi perturber la lubrification. Traditionnellement, le contrôle et le débouchage des orifices un à un est effectué manuellement par l'opérateur au moyen d'un fil ou d'une tige adéquats. Ainsi on peut déboucher chaque canal de lubrification proprement dit, les copeaux déplacés étant alors extraits de l'outil par exemple au moyen d'air comprimé.

Aujourd'hui, on ne connaît pas un outillage de contrôle standardisé adapté aux canaux de lubrification d'un alésoir. Le contrôle effectué se limite par exemple :
- à une inspection visuelle ;
- à une inspection utilisant un liquide ou de l'air comprimé pour nettoyer les orifices.

### Buts de l'invention

La présente invention vise à fournir une solution qui permette de surmonter les inconvénients de l'état de la technique.

En particulier, la présente invention vise à fournir un outillage de contrôle standardisé, simple, pratique et productif pour le contrôle, avec nettoyage éventuel, simultanément tous les canaux de lubrification d'un alésoir à alésage central.

### Principaux éléments caractéristiques de l'invention

La présente invention se rapporte à un outillage de contrôle et/ou de nettoyage d'un outil de coupe de précision, de préférence à arrosage central, comportant une pluralité d'orifices de lubrification, de préférence dont le nombre correspond au nombre de lèvres de coupe, comprenant un manche comportant lui-même une pluralité de fils ou tiges souples, dont le nombre est égal au nombre desdits orifices de lubrification à contrôler, une bague déplaçable présentant une pluralité de canaux, la traversant de part en part et prévus pour le passage des fils ou tiges, de telle sorte que ladite bague peut coulisser entre la base des tiges fixées sur le manche et l'extrémité libre opposée desdites tiges.

De préférence, l'espacement entre lesdites extrémités libres desdites tiges et la disposition de ces extrémités, lorsque ladite bague est disposée en position à l'extrémité libres desdites tiges, correspond exactement à l'espacement entre les orifices de lubrification de l'outil de coupe et leur disposition.

Ledit outil de coupe de précision peut être un alésoir, un outil de tour à plaquettes amovibles, une fraise pour vitesse de coupe élevée, un foret, un taraud.

De préférence, il est réalisé en métal dur, carbure, acier rapide, acier trempé, nitrure de bore ou diamant.

La pièce à usiner sera, par exemple, constituée en Inconel ou en titane.

La présente invention se rapporte également à un procédé de contrôle et/ou de nettoyage des orifices de lubrification d'un outil de coupe de précision à l'aide d'un outillage de contrôle et/ou de nettoyage tel que décrit précédemment et comprenant les étapes suivantes:
- on positionne la bague déplaçable de l'outillage de contrôle de telle sorte que sa face se positionne à l'extrémité libre des tiges;
- on dispose l'outillage en face de l'outil de coupe de telle sorte que les orifices de lubrification soient exactement en position face aux extrémités libres desdites tiges;
- on introduit progressivement lesdites tiges à l'intérieur des orifices de lubrification, la bague reculant en direction du manche; et
- le cas échéant, on injecte de l'air ou un liquide, éventuellement sous pression dans lesdits orifices de lubrification après retrait de l'outillage de contrôle.

La présente invention se rapporte également à l'utilisation d'un outillage ou d'un procédé décrits précédemment pour le contrôle et/ou le nettoyage d'outils de coupe ou de gravage de précision, présentant des orifices de lubrification et utilisés sur des machines à commandes numériques dans l'industrie mécanique de précision, par exemple l'industrie aéronautique.

### Brève description des figures

La présente invention sera décrite plus en détails à l'aide des figures qui suivent.

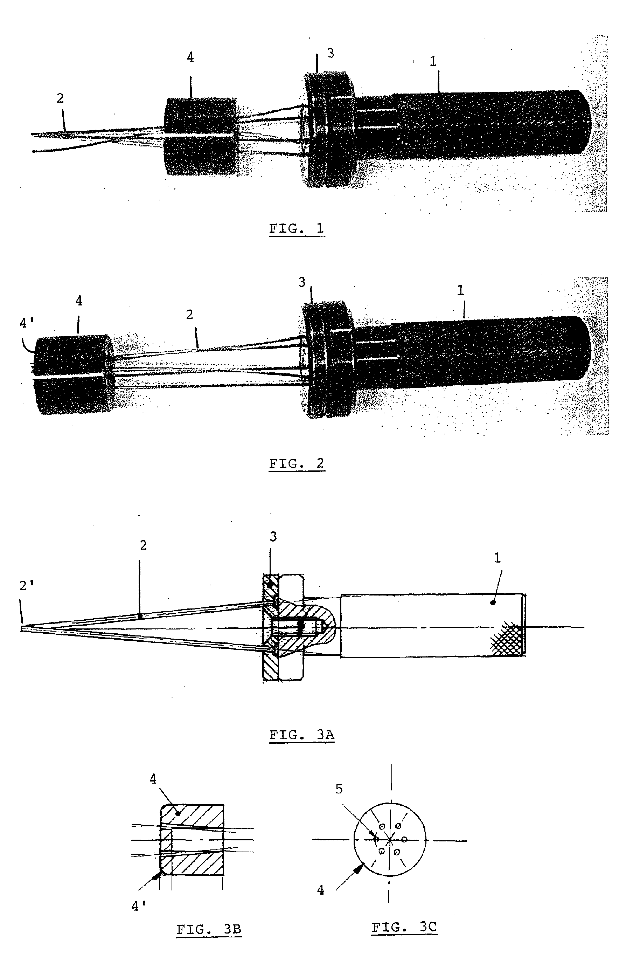

La figure 1 représente une vue d'un outillage de contrôle selon l'invention, où la bague n'est pas en position d'introduction des tiges.

La figure 2 représente une autre vue de cet outillage où la bague est en position d'introduction des tiges.

La figure 3A représente une vue partiellement en coupe longitudinale du manche et de ses tiges pour l'outillage selon l'invention.

La figure 3B représente une vue en coupe longitudinale de la bague de l'outillage selon l'invention.

La figure 3C représente une vue en coupe transversale de la bague de l'outillage selon l'invention.

### Description d'une forme d'exécution préférée de l'invention

Le caractère innovant de l'outillage proposé par la présente invention réside dans le fait que celui-ci permet de contrôler en une seule opération le libre passage de tous les orifices ou canaux de lubrification d'un outil de coupe, par exemple à arrosage central.

L'outillage représenté sur les figures comporte un manche 1 muni d'une pluralité de tiges métalliques 2 solidarisées au manche via une base 3 et dont le nombre est égal au nombre d'orifices et canaux prévus dans l'outil de coupe. Chaque tige 2 est capable de pénétrer dans un desdits orifices de lubrification. Le diamètre des tiges 2 et la nature du métal utilisé sont tels que celles-ci possèdent une certaine souplesse favorisant leur introduction dans l'orifice correspondant de l'outil de coupe.

L'outillage comporte en outre une bague 4 amovible et déplaçable présentant autant d'orifices et canaux 5 que de tiges 2 attachées au manche 1, ladite bague 4 pouvant coulisser le long de ces tiges 2.

L'espacement entre les canaux 5 et la disposition de ceux-ci sont tels que, lorsque le bord 4' de la bague 4 est au bout desdites tiges, la position des extrémités 2' des tiges est telle que l'espacement entre ces extrémités libres 2' correspond exactement à l'espacement entre les orifices de lubrification de l'alésoir, pour une disposition identique.

Une fois que les tiges 2 se sont engagées dans les orifices de lubrification de l'alésoir, on peut retirer la bague 4 vers l'arrière, c'est-à-dire en direction du manche 1, et, faire pénétrer les tiges 2 au fond des orifices de lubrification. Les différentes tiges permettent alors de repousser d'éventuels copeaux ou résidus présents à l'intérieur vers le fond des orifices avant de les extraire de l'outil par exemple par un coup de soufflette à air comprimé.

L'utilisation de l'outillage de contrôle selon l'invention présente l'avantage de conduire à une meilleure productivité du fait que l'opération de contrôle et de nettoyage peut être effectuée en un temps plus court permettant ainsi de préserver les outils de coupe contre l'usure et la casse ou la détérioration.

## Revendications

1. Outillage de contrôle et/ou de nettoyage d'un outil de coupe de précision, de préférence à arrosage central, comportant une pluralité d'orifices ou canaux de lubrification, **caractérisé en ce qu'**il comprend :
- un manche (1) comportant une pluralité de fils ou tiges (2) souples, dont le nombre est égal au nombre desdits orifices de lubrification à contrôler,
- une bague (4) déplaçable et amovible présentant une pluralité de canaux (5), la traversant de part en part et prévus pour le passage des tiges (2), ladite bague (4) pouvant coulisser entre la base (3) des tiges (2) associée au manche (1) et leur extrémité libre (2') desdites tiges (2).

2. Outillage selon la revendication 1, **caractérisé en ce que** la disposition et l'espacement entre lesdites extrémités libres (2') desdites tiges (2), lorsque ladite bague (4) est disposée en position à l'extrémité desdites tiges (2'), correspondent à la disposition et à l'espacement entre les orifices de lubrification de l'outil de coupe.

3. Procédé de contrôle et/ou de nettoyage des orifices de lubrification d'un outil de coupe de précision à l'aide d'un outillage de contrôle et/ou de nettoyage tel que décrit précédemment et comprenant les étapes suivantes:
- on positionne la bague déplaçable de l'outillage de contrôle de telle sorte que sa face se positionne à l'extrémité libre des tiges;
- on dispose l'outillage en face de l'outil de coupe de telle sorte que les orifices de lubrification soient exactement en position face aux extrémités libres desdites tiges;
- on introduit progressivement lesdites tiges à l'intérieur des orifices de lubrification, la bague reculant en direction du manche; et
- le cas échéant, on injecte de l'air ou un liquide, éventuellement sous pression dans lesdits orifices de lubrification après retrait de l'outillage de contrôle.

4. Utilisation d'un outillage selon l'une quelconque des revendications 1 à 3, pour le contrôle et le débouchage d'outils de coupe ou de gravage de précision à canaux de lubrification destinés à un arrosage central, mis en oeuvre sur des machines à commandes numériques dans l'industrie mécanique de précision, de préférence l'industrie aéronautique.

5. Utilisation d'un outillage selon l'une quelconque des revendications 1 ou 2 pour le contrôle et/ou le nettoyage d'outils de coupe tel un alésoir, un outil de tour à plaquettes amovible, une fraise à vitesse de coupe élevée, un foret ou un taraud.

6. Utilisation de l'outillage selon la revendication 1 ou 2 pour le contrôle et/ou le nettoyage d'un outil de coupe ou de gravage de précision mis en oeuvre sur une machine à commandes numériques dans l'industrie mécanique de précision, de préférence l'industrie aéronautique.
